# EUROPÄISCHE PATENTSCHRIFT

(11) **EP 3 426 519 B1**
(45) Veröffentlichungstag und Bekanntmachung des Hinweises auf die Patenterteilung: **20.11.2019**
(21) Anmeldenummer: 17706254.4
(22) Anmeldetag: 21.02.2017
(51) Int. Cl.: B60Q 1/26, F21S 43/237, F21S 43/245, F21S 43/31, F21S 43/40, B60R 19/52

(54) **KRAFTFAHRZEUG**
MOTOR VEHICLE
VÉHICULE À MOTEUR

(30) Priorität: 10.03.2016 DE 102016203964
(43) Veröffentlichungstag der Anmeldung: 16.01.2019
(73) Patentinhaber: Bayerische Motoren Werke Aktiengesellschaft, 80809 München (DE)
(72) Erfinder: SIELER, Marcel, Menlo Park, California 94025 (US); DROZDZYK, Dominik, 52-129 Wroclaw (PL)
(86) Internationale Anmeldenummer: PCT/EP2017/053896
(87) Internationale Veröffentlichungsnummer: WO 2017/153163

(56) Entgegenhaltungen:
- DE-A1-102007 018 678
- DE-A1-102014 015 185
- DE-U1-202012 008 792

## Beschreibung

Die Erfindung betrifft ein Kraftfahrzeug mit einem Kühlergrill.

Für Kraftfahrzeuge sind verschiedene Scheinwerfer, Blinkleuchten, Begrenzungs- und Umrissleuchten, Kennzeichenleuchten sowie Leuchten für den Fahrzeuginnenraum bekannt. Die Anordnung und/oder Gestaltung der Leuchten hat einen wichtigen Einfluss auf das Fahrzeugdesign, das wiederum für den Verkaufserfolg eines Fahrzeugs mitentscheidend ist.

Insbesondere Kraftfahrzeug-Scheinwerfer haben in letzter Zeit als designprägende Bestandteile von Kraftfahrzeugen große Bedeutung erlangt, da sie geeignet sind, das Design eines Kraftfahrzeuges bei Tag und Nacht zu prägen.

In dem Bestreben, ein fahrzeug- und markenspezifisches Nachtdesign weiter zu schärfen, wurde in der DE 36 009 28 A1 vorgeschlagen, den als Markenzeichen dienenden Kühlergrill eines Kraftfahrzeugs mit Hilfe einer Zusatzleuchte anzustrahlen, um bei Nacht eine Erkennung des Fahrzeugs zu ermöglichen. Die Zusatzleuchte ist im Außenbereich des Fahrzeugs, beispielsweise auf der vorderen Stoßstange angeordnet. Obwohl diese Vorrichtung prinzipiell dazu geeignet ist, den Erkennungswert eines Fahrzeugs bei Nacht zu verbessern, birgt sie den Nachteil, dass sowohl durch die Zusatzleuchte selbst als auch durch den angestrahlten Kühlergrill eine Blendung von anderen Verkehrsteilnehmern hervorgerufen werden kann, insbesondere dann, wenn der Kühlergrill oder Teile davon verchromt und/oder mit stark und gut reflektierenden Lacken versehen sind. Außerdem kann die Zusatzleuchte leicht verschmutzen und bewirkt ein unerwünscht zerklüftetes Erscheinungsbild der Fahrzeugfront.

Ein gattungsgemäßes Kraftfahrzeug ist aus der DE 10 2014 015 185 A1 bekannt.

Der Erfindung liegt nun die Aufgabe zu Grunde, ein verbessertes Kraftfahrzeug anzugeben.

Diese Aufgabe wird durch die Merkmale des unabhängigen Anspruchs gelöst. Vorteilhafte Weiterbildungen der Erfindung sind den abhängigen Ansprüchen zu entnehmen.

Ein erfindungsgemäßes Kraftfahrzeug ist mit einem Kühlergrill ausgestattet, der eine Vielzahl von zueinander beabstandeten Leuchtkörpern umfasst. Den Leuchtkörpern ist jeweils eine Blende, insbesondere in Fahrtrichtung, vorgelagert, durch die vorzugsweise eine direkte Abstrahlung von Licht aus dem Kraftfahrzeug nach außen verhindert wird.

Den Leuchtkörpern ist jeweils eine Reflektoreinheit zugeordnet, die derart ausgeführt und angeordnet ist, dass Licht des Leuchtkörpers bzw. der Leuchtkörper jeweils durch die zugeordnete Reflektoreinheit derart reflektiert wird, dass Licht durch den Kühlergrill aus dem Kraftfahrzeug nach außen, insbesondere aus dem Kraftfahrzeug heraus, abgestrahlt wird.

Dadurch wird einerseits ein besonders wirksamer und damit design- und markenprägender ästhetischer Effekt erzielt, und andererseits durch die lediglich indirekte, über die Reflektoreinheiten bewirkte Abstrahlung erreicht, dass andere Verkehrsteilnehmer nicht durch das direkt abgestrahlte Licht der Leuchtkörper geblendet werden, und dass damit die gesetzgeberischen Vorgaben hinsichtlich der Außenbeleuchtung von Kraftfahrzeugen eingehalten werden können.

Die Blenden sind vorzugsweise jeweils dem zugeordneten Leuchtkörper im Wesentlichen in Fahrzeuglängsrichtung vorgelagert, um eine direkte Abstrahlung von Licht durch den Leuchtkörper in Fahrzeuglängsrichtung weitgehend zu verhindern. Unter "Fahrtrichtung" oder "Fahrzeuglängsrichtung" wird im Rahmen der Erfindung insbesondere die "Vorwärts-Fahrtrichtung" oder die Fahrzeuglängsrichtung vom Fahrzeugheck zur Fahrzeugfront verstanden. Die Blenden können auch Teil eines Standard-Kühlergrills sein. Sie können aus verschiedenen Materialien, wie Stahl oder Kunststoff, hergestellt sein.

Die Leuchtköper sind mit ausgeprägter länglicher Erstreckung, insbesondere stabförmig, lamellenförmig oder rippenförmig ausgeführt. Besonders bevorzugt sind auch die Blenden und/oder Reflektoreinheiten stabförmig, lamellenförmig oder rippenförmig ausgeführt. Dabei weicht die Länge (jeweils in Richtung der maximalen länglichen Erstreckung) eines Leuchtkörpers von der Länge (jeweils in Richtung der maximalen länglichen Erstreckung) einer zugeordneten Blende und/oder der Länge (jeweils in Richtung der maximalen länglichen Erstreckung) einer zugeordneten Reflektoreinheit vorzugsweise um weniger als 30%, 20% oder 10% ab.

Die Reflektoreinheiten sind in Fahrzeuglängsrichtung hinter dem Leuchtkörper in Fahrzeugquerrichtung versetzt zu den Leuchtkörpern angeordnet. Eine oder die Reflektoreinheiten sind oder umfassen beispielsweise jeweils reflektierende Flächen (Oberflächen), wobei sich die reflektierende Eigenschaft vorzugsweise aus dem Material der Flächen (Oberflächen) ergibt. Vorzugsweise besteht die Reflektoreinheit aus einem reflektierenden Metall oder aus einem mit beispielsweise Chrom oder Aluminium bedampften Kunststoff. Vorzugsweise handelt es sich bei den Reflektoreinheiten um diffus-reflektierende oder streuend-reflektierende Reflektoreinheiten.

Der Abstand zwischen Leuchtkörpern und jeweils zugeordneter Reflektoreinheit ist vorzugsweise größer als der Abstand zwischen Leuchtkörpern und jeweils zugeordneter, insbesondere vorgelagerter, Blende, vorzugsweise fünfmal größer oder zehnmal größer.

Eine Blende hat vorzugsweise eine mit dem Leuchtköper zumindest teilweise korrespondierende Form, so dass der Leuchtkörper durch die Blende teilweise, insbesondere zu mehr als 30%, 40% oder 50% eingehüllt oder eingefasst ist. Dadurch ist die durch die Blende bewirkte Abschattung besonders effektiv. Vorzugsweise wird der Leuchtkörper dadurch auch durch die Blende mechanisch stabilisiert und geschützt.

Eine Blende ist vorzugsweise alternativ oder ergänzend dazu als Teil des Leuchtkörpers gebildet und/oder wird vorzugsweise durch den Leuchtkörper getragen. Beispielsweise ist die Blende als Lackierung des Leuchtkörpers, als Beschichtung des Leuchtkörpers, als Oberflächenbehandlung des Leuchtkörpers oder als eine durch den Leuchtkörper getragene Folie ausgeführt.

Durch die genannten Ausführungsvarianten wird erreicht, dass die Erfindung einfach, wirksam und zuverlässig in die Praxis umgesetzt werden kann.

Es ist eine Weiterbildung der Erfindung, dass die Leuchtkörper im Wesentlichen parallel zueinander ausgeführt sind.

Gemäß einer anderen Weiterbildung sind zusätzlich oder alternativ die Blenden und/oder die Reflektoreinheiten im Wesentlichen parallel zueinander ausgeführt.

Der Abstand zwischen benachbarten Blenden, zwischen benachbarten Reflektoreinheiten und zwischen benachbarten Leuchtkörpern ist vorzugsweise im Wesentlichen identisch.

Vorzugsweise sind zumindest zwei oder alle Reflektoreinheiten jeweils durch im Wesentlichen ebene Flächen gebildet, wobei insbesondere zumindest zwei benachbarte oder alle Reflektoreinheiten zueinander im Wesentlichen parallel sind. Gemäß einer ergänzenden oder alternativen Ausführungsform schließen die Reflektoreinheiten oder die Tangentialebenen durch die Symmetrieachsen oder durch die Symmetrieebenen der Reflektoreinheiten jeweils mit der Fahrzeugquerachse einen spitzen Winkel ein, der vorzugsweise kleiner als 45 Grad ist.

Vorzugsweise definieren die Blenden, insbesondere deren Vorderseiten oder Vorderkanten, gegebenenfalls zusammen mit einem Kühlergrillrahmen die Vorderseite des Kühlergrills.

Es ist eine Weiterbildung der Erfindung, dass der Kühlergrill zumindest einen Rahmen umfasst oder bildet, und dass die Leuchtkörper und/oder die Blenden und/oder die Reflektoreinheiten durch den Rahmen getragen werden.

Vorzugsweise umfassen die Leuchtkörper jeweils einen Lichtleiter oder sind im Wesentlichen durch einen Lichtleiter gebildet. Besonders bevorzugt wird in die Lichtleiter jeweils an einem Ende oder den Enden Licht eingekoppelt.

Vorzugsweise wird durch eine Prismierung, eine Reflexionsschicht, eine Streuschicht, eine aufgeraute Oberfläche oder eine Streufolie auf der der Blende zugewandten Seite des Lichtleiters oder durch Streumittel im Lichtleiter eine Auskopplung von Licht aus dem Lichtleiter auf der der zugehörigen Reflektoreinheit zugewandten Seite des Lichtleiters bewirkt.

Der Lichtleiter kann beispielsweise durch ein Glasfaserbündel gebildet sein, die lichtstreuende Partikel enthalten, und die durch eine transparente Ummantelung zusammengehalten und/oder getragen werden.

Ein oder jeder Leuchtkörper, insbesondere Lichtleiter, ist derart ausgeführt, dass der Schwerpunkt der durch ihn erzeugten Lichtverteilung in Richtung der zugeordneten Reflektoreinheit zeigt oder auf dieser liegt.

Als Lichtquelle werden vorzugsweise Leuchtdioden eingesetzt, die jeweils an einem oder den Enden eines oder der Leuchtkörper, insbesondere Lichtleiter, angeordnet sind, um Licht in den Leuchtkörper, insbesondere Lichtleiter, einzukoppeln.

Alternativ oder ergänzend dazu umfasst ein Leuchtkörper als Lichtquelle zumindest eine Leuchtfolie oder eine Vielzahl von Leuchtdioden, die vorzugsweise entlang einem Leuchtkörper angeordnet sind. Vorzugsweise umfassen die Leuchtkörper streifenförmige OLEDs oder LED-Arrays oder sind dadurch gebildet.

Vorzugsweise sind die Lichtquellen und Leuchtkörper derart ausgeführt, dass die durch die Leuchtkörper erzeugte Lichtverteilung zusammen mit der Lichtverteilung der Standlichtscheinwerfer und/oder der Abblendlichtscheinwerfer und/oder der Tagfahrlichtscheinwerfer und/oder der Vorfeldbeleuchtungseinrichtung die zugehörigen Grenzwerte der entsprechenden vorgegebenen Lichtverteilung nicht überschreitet.

Es ist eine Weiterbildung der Erfindung, dass die Blenden jeweils derart ausgeführt und relativ zu einem Leuchtkörper angeordnet sind, dass der Leuchtkörper bei geschlossener Motorhaube von außen nicht sichtbar ist und/oder im Wesentlichen kein Licht des Leuchtkörpers direkt (ohne Reflexion) aus dem Kraftfahrzeug, insbesondere durch den Kühlergrill, nach außen abgestrahlt wird.

Es ist eine Weiterbildung, dass die Reflektoreinheiten jeweils derart ausgeführt und relativ zu einem Leuchtkörper angeordnet sind, dass Licht eines Leuchtkörpers bei geschlossener Motorhaube dadurch indirekt aus dem Kraftfahrzeug, insbesondere durch den Kühlergrill, nach außen abgestrahlt wird, dass Licht des Leuchtkörpers durch die zugeordnete Reflektoreinheit derart umgelenkt wird, dass es durch den Zwischenraum, der zwischen dem Leuchtkörper und einem benachbarten Leuchtkörper liegt, nach außen abgestrahlt wird.

Gemäß einer bevorzugten Ausführungsform sind die Reflektoreinheit eines Leuchtkörpers (Reflektoreinheit ist dem Leuchtkörper funktional zugeordnet) und die Blende eines benachbarten Leuchtkörpers unmittelbar, insbesondere formschlüssig, kraftschlüssig oder stoffschlüssig, miteinander verbunden oder sind einstückig gebildet. Dadurch ist eine stabile und kostengünstige Umsetzung der Erfindung in die Praxis möglich. Vorzugsweise ist nur der Abschnitt der gemeinsamen Komponente reflektierend ausgeführt (beispielsweise durch eine abschnittweise Oberflächenbehandlung, Lackierung oder Bedampfung), der als Reflektoreinheit wirken soll. Besonders bevorzugt bestehen dabei die Blende und der Grundkörper der Reflektoreinheit aus dem gleichen Material.

Bei einer Weiterbildung der Erfindung sind die Blenden und/oder die Reflektoreinheiten als Luftleitflächen ausgeführt, insbesondre derart, dass sie geeignet sind, Luft durch den Kühlergrill in den Motorraum des Kraftfahrzeuges zu leiten.

Dadurch wird durch die die Leuchtfunktion realisierenden Komponenten die technische Funktion des Kühlergrills unterstützt. Vorzugsweise sind die Außenflächen der Blenden und/oder der Reflektoreinheiten derart als Luftleitflächen ausgeführt, dass anströmende Außenluft gezielt und strömungsgünstig in den Motorraum geleitet wird.

Vorzugsweise umfasst der Kühlergrill zwei Teileinheiten, die zueinander symmetrisch angeordnet und ausgeführt sind.

Im Folgenden wird die Erfindung anhand von Beispielen unter Bezugnahme auf die folgenden Figuren näher erläutert:
- Figur 1: zeigt eine schematische Prinzipdarstellung eines Kühlergrills;
- Figuren 2 bis 5: zeigen vereinfachte Prinzipdarstellungen mehrerer Leuchtkörper samt zugehöriger Blenden und Reflektoreinheiten im Querschnitt.

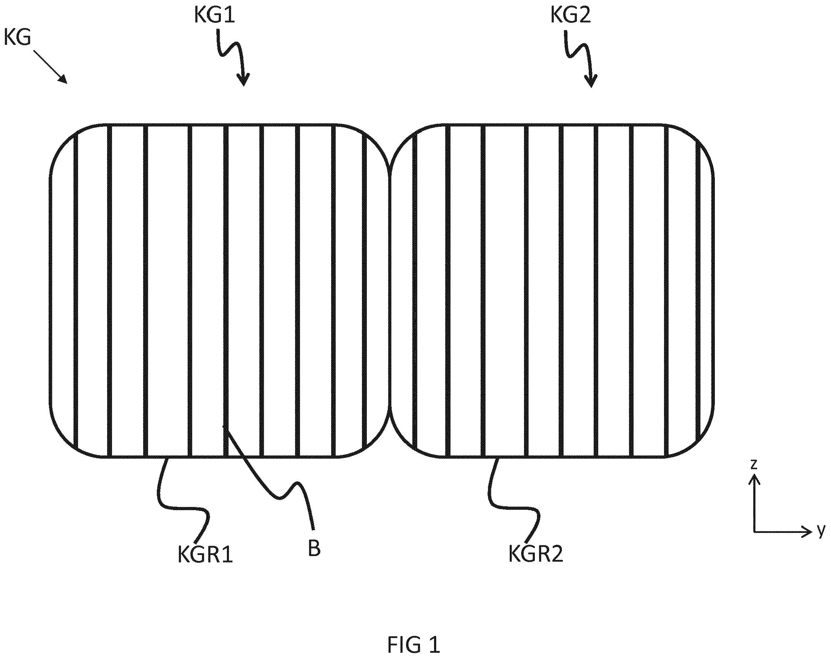

Figur 1 zeigt einen Kühlergrill KG eines Kraftfahrzeuges von vorne (Betrachter steht vor dem Fahrzeug und schaut auf Fahrzeug), der aus zwei zueinander symmetrischen Kühlerteilgrills KG1, KG2 besteht. Jeder Kühlerteilgrill KG1, KG2 umfasst einen Kühlerteilgrillrahmen KGR1,KGR2, die jeweils eine Vielzahl vertikal und parallel zueinander verlaufender Leuchtkörper tragen.

Die Leuchtkörper sind in der Figur nicht sichtbar, weil sie durch die vorgelagerten Blenden B verdeckt sind. Je nach Ausführungsvariante können alle oder nur ein Teil der dargestellten vertikal verlaufenden Lamellen durch Blenden und/oder Leuchtkörper gebildet sein. Die übrigen Lamellen können als "normale" oder herkömmliche Kühlergrill-Lamellen ausgeführt sein, die keine aktive Leuchtvorrichtung abdecken.

Zur Vereinfachung sind in dieser Figur die Reflektoreinheiten nicht dargestellt.

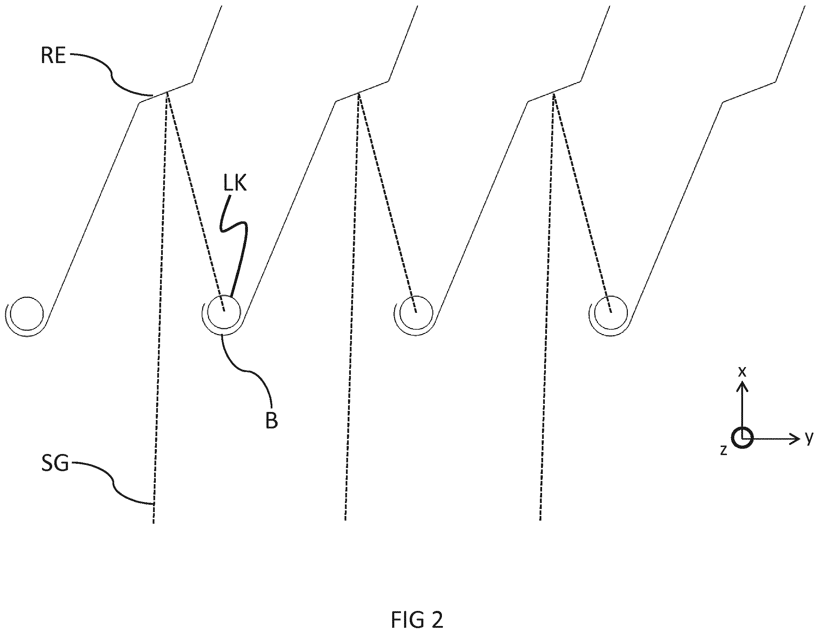

Figur 2 zeigt eine Schnittdarstellung einer Vielzahl von zueinander beabstandeten Leuchtkörpern LK, die durch einen nicht dargestellten Rahmen eines Kühlergrills getragen werden.

Den Leuchtkörpern LK ist jeweils in Fahrzuglängsrichtung oder Fahrtrichtung (hier negative x-Richtung) eine Blende B vorgelagert. Den Leuchtkörpern LK ist jeweils eine Reflektoreinheit RE zugeordnet, durch die das durch den Leuchtkörper LK abgestrahlte Licht entsprechend dem vereinfacht dargestellten Strahlengang SG derart reflektiert wird, dass Licht durch den Kühlergrill aus dem Kraftfahrzeug nach außen, im Wesentlichen in Fahrzuglängsrichtung oder Fahrtrichtung (hier negative x-Richtung), abgestrahlt wird.

Bei den Leuchtkörpern LK handelt es sich beispielsweise um stabförmige Lichtleiter, deren längliche Erstreckung in z-Richtung liegt. Die Reflektoreinheiten RE sind jeweils vorzugsweise durch eine im Wesentlichen ebene Reflektorfläche oder Reflektorebene gebildet. Die Reflektorflächen sind vorzugsweise zueinander im Wesentlichen parallel.

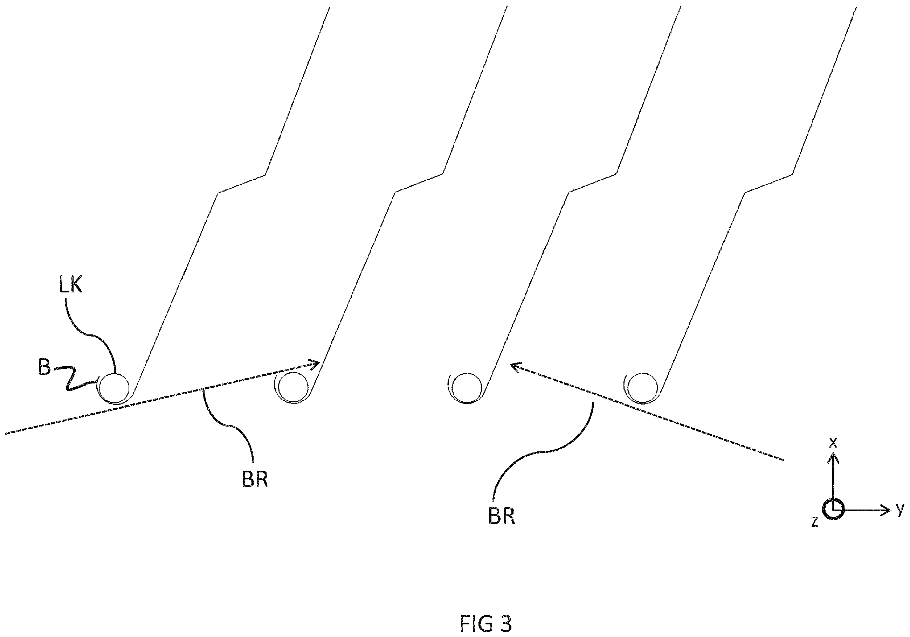

Wie in Figur 3 gezeigt, sind die Leuchtkörper LK und die Blenden B derart ausgeführt und angeordnet, dass es für einen außerhalb des Kraftfahrzeuges befindlichen Betrachter keine Blickrichtung BR gibt, die eine direkte Sicht auf einen Leuchtkörper LK ermöglichen würde. Eine Blendung anderer Verkehrsteilnehmer wird dadurch verhindert und gesetzgeberische Vorgaben werden eingehalten.

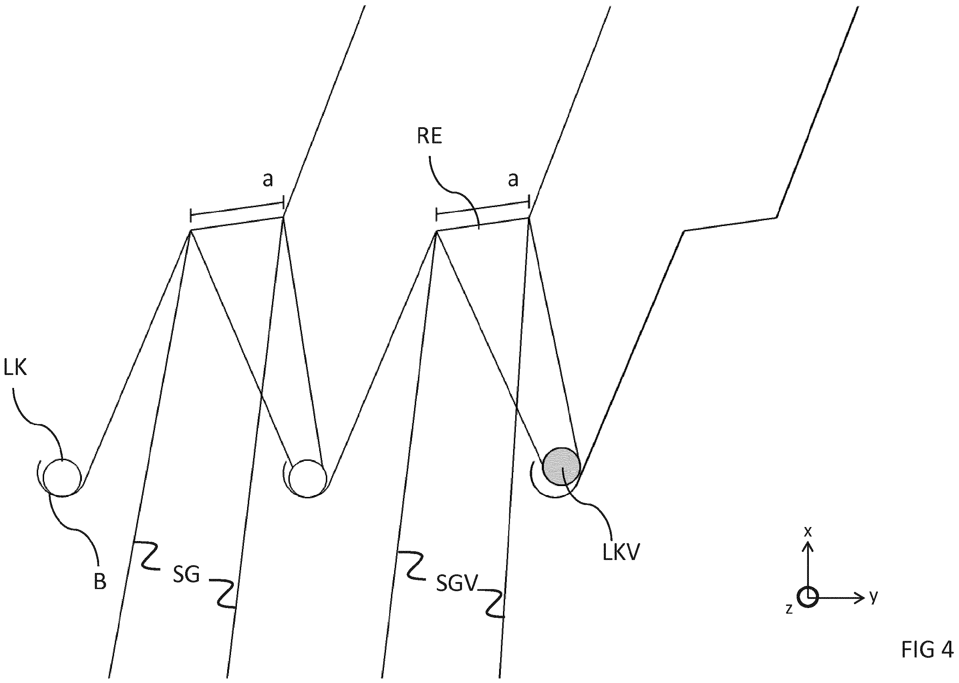

Anhand Figur 4 wird ein weiterer Vorteil der Erfindung veranschaulicht. Beispielsweise aufgrund einer mechanischen Beeinflussung ist im vorliegenden Beispiel ein Leuchtkörper LKV gegenüber seiner ursprünglichen Position ganz oder teilweise verschoben worden. Eine solche Verschiebung eines direkt sichtbaren Leuchtkörpers, der parallel zu einer Vielzahl weiterer Leuchtkörper angeordnet ist, würde für einen Betrachter störend wirken. Durch die Erfindung verändert sich durch die Verschiebung des Leuchtkörpers LKV zwar der Strahlengang SGV, diese Verschiebung ist aber auch aufgrund der indirekten Abstrahlung über die Reflektoreinheit RE für einen Betrachter kaum wahrnehmbar.

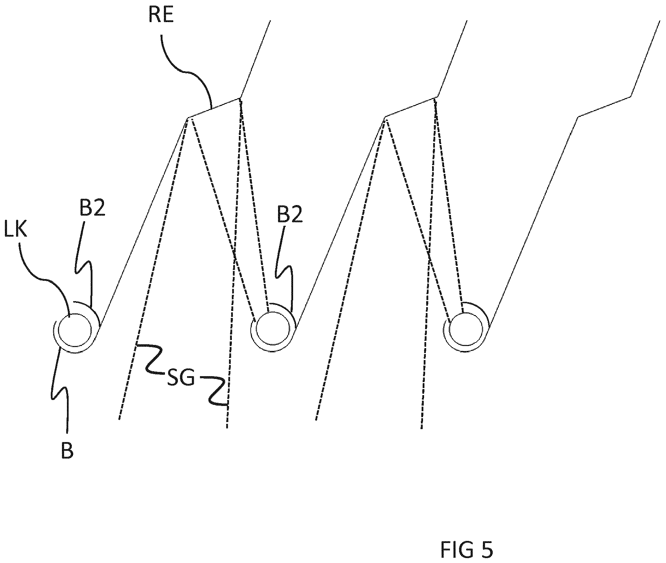

Figur 5 zeigt eine weitere Verbesserung der Erfindung. Es ist dabei neben der in Fahrtrichtung vorgelagerten Blende B, eine weitere Blende B2 vorgesehen, durch die eine Abstrahlung von Licht in eine Richtung neben die Reflektoreinrichtung RE verhindert wird.

Zu Fertigungszwecken kann vorgesehen sein, dass der Leuchtkörper zunächst im Wesentlichen komplett durch Blendenmaterial eingehüllt wird, und in einem weiteren Schritt, beispielsweise durch eine gezielte Laserung, ein Teil des Blendenmaterials entfernt wird, so dass durch den entstehenden Schlitz Licht von einem Leuchtkörper zielgerichtet auf die zugehörige Reflektoreinheit abgestrahlt wird.

## Patentansprüche

1. Kraftfahrzeug
- mit einem Kühlergrill (KG), der eine Vielzahl von zueinander beabstandeten, länglichen Leuchtkörpern (LK) umfasst,
- bei dem den Leuchtkörpern (LK) jeweils, insbesondere in Fahrtrichtung, eine längliche Blende (B) vorgelagert ist,
- bei dem den Leuchtkörpern (LK) jeweils eine längliche Reflektoreinheit (RE) zugeordnet ist, die derart ausgeführt und angeordnet ist, dass Licht des Leuchtkörpers (LK) jeweils durch die zugeordnete Reflektoreinheit (RE) derart reflektiert wird, dass Licht durch den Kühlergrill (KG) aus dem Kraftfahrzeug nach außen abgestrahlt wird, **dadurch gekennzeichnet, dass**
- die Länge eines jeweiligen Leuchtkörpers in Richtung der maximalen länglichen Erstreckung von der Länge einer zugeordneten Blende in Richtung der maximalen länglichen Erstreckung und der Länge einer zugeordneten Reflektoreinheit in Richtung der maximalen länglichen Erstreckung um weniger als 30% abweicht, und
- die Reflektoreinheiten jeweils in Fahrzeuglängsrichtung hinter dem zugeordneten Leuchtkörper in Fahrzeugquerrichtung versetzt zu dem zugeordneten Leuchtkörper angeordnet sind.

2. Kraftfahrzeug nach Anspruch 1,
bei dem die Leuchtkörper (LK) im Wesentlichen parallel zueinander ausgeführt sind.

3. Kraftfahrzeug nach einem der vorhergehenden Ansprüche,
bei dem die Blenden (B) und/oder die Reflektoreinheiten (RE) im Wesentlichen parallel zueinander ausgeführt sind.

4. Kraftfahrzeug nach einem der vorhergehenden Ansprüche,
bei dem die Leuchtkörper (LK) jeweils einen Lichtleiter umfassen oder jeweils im Wesentlichen durch einen Lichtleiter gebildet sind, und/oder die Leuchtkörper jeweils streifenförmige OLEDs oder LED-Arrays umfassen oder dadurch gebildet sind.

5. Kraftfahrzeug nach einem der vorhergehenden Ansprüche,
bei dem die Blenden (B) jeweils derart ausgeführt und relativ zu einem Leuchtkörper (LK) angeordnet sind, dass der Leuchtkörper (LK), insbesondere bei geschlossener Motorhaube, von außen nicht sichtbar ist und/oder im Wesentlichen kein Licht des Leuchtkörpers (LK) direkt aus dem Kraftfahrzeug, insbesondere durch den Kühlergrill (KG), nach außen abgestrahlt wird.

6. Kraftfahrzeug nach einem der vorhergehenden Ansprüche,
bei dem die Reflektoreinheiten (RE) jeweils derart ausgeführt und relativ zu einem Leuchtkörper (LK) angeordnet sind, dass Licht eines Leuchtkörpers (LK), insbesondere bei geschlossener Motorhaube, dadurch indirekt aus dem Kraftfahrzeug, insbesondere durch den Kühlergrill (KG), nach außen abgestrahlt wird, dass Licht des Leuchtkörpers (LK) durch die zugeordnete Reflektoreinheit (RE) derart umgelenkt wird, dass es durch den Zwischenraum, der zwischen dem Leuchtkörper (LK) und einem benachbarten Leuchtkörper (LK) liegt, nach außen abgestrahlt wird.

7. Kraftfahrzeug nach einem der vorhergehenden Ansprüche,
bei dem die einem Leuchtkörper (LK) zugeordnete Reflektoreinheit (RE) und die Blende (B) eines benachbarten Leuchtkörpers (LK) unmittelbar miteinander verbunden sind oder einstückig gebildet sind.

8. Kraftfahrzeug nach einem der vorhergehenden Ansprüche,
bei dem die Blenden (B) und/oder die Reflektoreinheiten (RE) als Luftleitflächen ausgeführt sind, insbesondre derart, dass sie geeignet sind Luft durch den Kühlergrill in den Motorraum des Kraftfahrzeuges zu leiten.

9. Kraftfahrzeug nach einem der vorhergehenden Ansprüche,
bei dem der Kühlergrill (KG) zwei Teileinheiten (KG1, KG2) umfasst, die zueinander symmetrisch angeordnet und ausgeführt sind.

## Claims

1. A motor vehicle
- with a radiator grille (KG) which comprises a large number of elongate luminous elements (LK) which are spaced apart from each other,
- in which in each case an elongate baffle (B) is mounted in front of the luminous elements (LK), especially in the direction of travel,
- in which in each case an elongate reflector unit (RE) is associated with the luminous elements (LK), which unit is configured and arranged such that light from the luminous element (LK) is reflected in each case by the associated reflector unit (RE) such that light is emitted outwards through the radiator grille (KG) out of the motor vehicle, **characterised in that**
- the length of a respective luminous element in the direction of the maximum elongate extent deviates from the length of an associated baffle in the direction of the maximum elongate extent and the length of an associated reflector unit in the direction of the maximum elongate extent by less than 30%, and
- the reflector units in each case in the longitudinal direction of the vehicle are arranged behind the associated luminous element in the transverse direction of the vehicle offset relative to the associated luminous element.

2. A motor vehicle according to Claim 1,
in which the luminous elements (LK) are configured substantially parallel to each other.

3. A motor vehicle according to one of the preceding claims,
in which the baffles (B) and/or the reflector units (RE) are configured substantially parallel to each other.

4. A motor vehicle according to one of the preceding claims,
in which the luminous elements (LK) in each case comprise a light guide or in each case are formed substantially by a light guide, and/or the luminous elements in each case comprise strip-shaped OLEDs or LED arrays or are formed thereby.

5. A motor vehicle according to one of the preceding claims,
in which the baffles (B) in each case are configured and are arranged relative to a luminous element (LK) such that the luminous element (LK), especially when the engine bonnet is closed, is not visible from the outside and/or substantially no light from the luminous element (LK) is emitted outwards directly out of the motor vehicle, especially through the radiator grille (KG).

6. A motor vehicle according to one of the preceding claims,
in which the reflector units (RE) in each case are configured and are arranged relative to a luminous element (LK) such that light from a luminous element (LK), especially when the engine bonnet is closed, is emitted outwards indirectly out of the motor vehicle, especially through the radiator grille (KG), in that the light of the luminous element (LK) is deflected by the associated reflector unit (RE) such that it is emitted outwards through the gap which lies between the luminous element (LK) and an adjacent luminous element (LK).

7. A motor vehicle according to one of the preceding claims,
in which the reflector unit (RE) associated with a luminous element (LK) and the baffle (B) of an adjacent luminous element (LK) are connected directly together or are formed in one piece.

8. A motor vehicle according to one of the preceding claims,
in which the baffles (B) and/or the reflector units (RE) are configured as air-deflecting faces, especially such that they are suitable for conducting air through the radiator grille into the engine compartment of the motor vehicle.

9. A motor vehicle according to one of the preceding claims,
in which the radiator grille (KG) comprises two partial units (KG1, KG2) which are arranged and configured symmetrically to each other.

## Revendications

1. Véhicule automobile comprenant une calandre (KG) qui comporte un ensemble de corps lumineux (LK) situés à distance les uns des autres, dans laquelle est monté, à l'avant des corps lumineux (LK) respectifs, en particulier dans la direction de déplacement un écran longitudinal (B), aux corps lumineux (LK) est respectivement associée une unité de réflecteur longitudinale (RE) qui est réalisée et installée pour que la lumière des corps lumineux (LK) soit respectivement réfléchie par l'unité de réflecteur (RE) associée de sorte que la lumière soit diffusée au travers de la calandre (KG) du véhicule vers l'extérieur,
**caractérisé en ce que**
la longueur d'un corps lumineux respectif en direction de son extension longitudinale maximum, diffère de la longueur d'un écran associé en direction de son extension longitudinale maximum et de la longueur d'une unité de réflecteur associée en direction de son extension longitudinale maximum d'au moins 30 %, et
les unités de réflecteur sont respectivement installées à l'arrière du corps lumineux associé dans la direction longitudinale du véhicule en étant décalées dans la direction transversale du véhicule par rapport au corps lumineux associé.

2. Véhicule automobile conforme à la revendication 1,
dans lequel les corps lumineux (LK) sont essentiellement parallèles.

3. Véhicule automobile conforme à l'une des revendications précédentes,
dans lequel les écrans (B) et/ou les unités de réflecteur (RE) sont essentiellement parallèles.

4. Véhicule automobile conforme à l'une des revendications précédentes,
dans lequel les corps lumineux (LK) comportent chacun un conducteur de lumière ou sont chacun essentiellement formés par un conducteur de lumière et/ou les corps lumineux comportent chacun des OLED ou des réseaux de LED en forme de bande ou sont formés par de tels éléments.

5. Véhicule automobile conforme à l'une des revendications précédentes,
dans lequel les écrans (B) sont respectivement réalisés et installés par rapport à un corps lumineux (LK) de sorte que en particulier lorsque le capot du moteur est fermé les corps lumineux (LK) ne soient pas visibles de l'extérieur et/ou qu'essentiellement aucune lumière du corps lumineux (LK) ne soit directement diffusée vers l'extérieur hors du véhicule, en particulier au travers de la calandre (KG).

6. Véhicule automobile conforme à l'une des revendications précédentes,
dans lequel les unités de réflecteur (RE) sont respectivement réalisées et installées par rapport à un corps lumineux (LK) de sorte qu'en particulier lorsque le capot du moteur est fermé, la lumière d'un corps lumineux (LK) soit indirectement diffusée vers l'extérieur hors du véhicule en particulier au travers de la calandre (KG) de façon que la lumière du corps lumineux (LK) soit dévié au travers de l'unité de réflecteur (RE) associée pour qu'elle soit diffusée vers l'extérieur au travers du volume intermédiaire qui est situé entre le corps lumineux (LK) et un corps d'éclairage (LK) voisin.

7. Véhicule automobile conforme à l'une des revendications précédentes,
dans lequel l'unité de réflecteur (RE) associée à un corps lumineux (LK) et l'écran (B) d'un corps lumineux (LK) voisin sont directement reliés ou réalisés en une seule pièce.

8. Véhicule automobile conforme à l'une des revendications précédentes,
dans lequel les écrans (B) et/ou les unités de réflecteur (RE) sont réalisé(e)s sous la forme de surfaces de guidage d'air en particulier de sorte qu'ils(elles) soient adapté(e)s pour guider l'air au travers de la calandre dans l'espace moteur du véhicule.

9. Véhicule automobile conforme à l'une des revendications précédentes,
dans lequel la calandre (KG) comporte deux unités partielles (KG1, KG2) qui sont positionnées et réalisées symétriquement l'une par rapport à l'autre.
